# FASCICULE DE BREVET EUROPEEN

(11) **EP 0 763 575 B1**
(45) Date de publication et mention de la délivrance du brevet: **20.01.1999**
(21) Numéro de dépôt: 96401876.6
(22) Date de dépôt: 02.09.1996
(51) Int. Cl.: C09D 5/08

(54) **Composition de revêtement pour la protection métallique contre la corrosion**
Überzugszusammensetzung zum Korrosionsschutz von Metallen
Coating composition for protecting metals for corrosion

(30) Priorité: 14.09.1995 FR 9510771
(43) Date de publication de la demande: 19.03.1997
(73) Titulaire: PRODUITS CHIMIQUES AUXILIAIRES ET DE SYNTHESE (P.C.A.S.), 91160 Longjumeau (FR)
(72) Inventeur: Kerherve, Jean-Pierre, 91310 Linas (FR)
(74) Mandataire: Faber, Jean-Paul

(56) Documents cités:
- EP-A- 0 093 323
- US-A- 4 582 543

## Description

La présente invention concerne une composition aqueuse destinée à protéger une surface métallique contre la corrosion, utilisable, en particulier, en tant que composition de revêtement directement applicable sur ladite surface ou comme additif dans une peinture destinée à être appliquée sur cette surface.

De nombreuses compositions de revêtement ont été proposées par le passé pour protéger les surfaces de métaux ferreux et non ferreux, ainsi que de leurs alliages, contre la corrosion. On obtient des revêtements anti-corrosion en appliquant les compositions sur lesdites surfaces. Les revêtements obtenus peuvent être permanents (peintures, par exemple) ou temporaires (il s'agit, par exemple, des huiles ou des cires de protection éliminables par des détergents ou par des solvants). Les compositions utilisées contiennent des éléments actifs et filmogènes mis en solution ou dispersés dans des solvants organiques ou dans de l'eau. Toutefois, les solvants organiques présentent de nombreux inconvénients connus : leur évaporation après application du revêtement pose des problèmes de pollution, voire, dans le cas de certains solvants, de toxicité ; ils sont en outre généralement peu biodégradables, ce qui a également des effets négatifs sur l'environnement ; ils sont relativement coûteux ; ils sont inflammables, etc.

La tendance actuelle est donc de privilégier les émulsions aqueuses, lesquelles renferment habituellement de l'eau, un inhibiteur de corrosion, un tensioactif ou émulgateur temporaire ou permanent, un co-solvant et un polymère générateur de film et/ou une cire. Aux fins de la présente description, "temporaire" qualifie un composé qui est susceptible d'agir comme tensioactif dans l'émulsion à partir de laquelle sera préparé le revêtement ou film de protection, puis de perdre ses propriétés tensioactives après application du revêtement sur la surface à traiter, par exemple par réaction chimique au cours du séchage du revêtement. Au contraire, "permanent" qualifie un composé qui conserve ses propriétés tensioactives après application du revêtement sur la surface à traiter et séchage.

Des émulsions aqueuses sont divulguées, par exemple, dans US-A-4 479 981 au nom de Ashland Oil, Inc., qui utilise comme inhibiteur de corrosion un sulfonate organique surbasé et comme tensioactif soit un sulfonate, soit un alcanol amide, soit un sel d'amine d'acide carboxylique. Les mêmes types de tensioactifs sont utilisés dans la composition de revêtement divulguée dans US-A-4 647 309 au nom de Ashland Oil, Inc., laquelle renferme en outre du noir de carbone. US-A-4 395 286 au nom de Cincinnati-Vulcan Company utilise comme tensioactif un sel d'amine (les sels d'ammonium étant exclus) ou de métal monovalent d'un acide sulfonique.

L'inconvénient de ces émulsions connues est qu'elles utilisent des tensioactifs permanents qui rendent le film, formé à partir de ces émulsions, sensible à l'eau. De ce fait, le revêtement de protection contre la corrosion n'atteint que des performances moyennes vis-à-vis de tests de corrosion tels que l'étuve à brouillard salin.

La présente invention a donc pour but de remédier aux inconvénients de l'art antérieur en proposant une nouvelle composition, sous forme d'émulsion aqueuse renfermant un tensioactif temporaire, laquelle composition est destinée à protéger une surface métallique contre la corrosion et est utilisable, en particulier, en tant que composition de revêtement directement applicable sur ladite surface, et comme additif dans une peinture adaptée à être appliquée sur cette surface. Il est bien entendu, toutefois, que ces applications de la composition selon l'invention ne sont pas limitatives et qu'elle pourra également être utilisée, par exemple, comme additif d'un primaire anticorrosion.

Précisément, la composition selon l'invention renferme, en émulsion dans l'eau :
a) au moins un composé surbasé dont l'indice de neutralisation basique est supérieur à 40 et dont le sel est insoluble dans l'eau ; et
b) au moins un tensioactif constitué d'un sel d'ammonium d'un acide organique.

Eventuellement, la composition pourra également renfermer un co-solvant.

La composition aqueuse selon l'invention contiendra en général de 40 à 95% d'eau et, de préférence, environ 70% d'eau.

L'adjectif "surbasé(s)" qualifie, dans le cadre de la présente invention, des matériaux également connus de l'homme du métier sous les noms de "complexes", "complexes métalliques", "sels riches en métal", etc. Les matériaux surbasés sont formés à partir d'un métal et d'un composé organique et ils renferment une teneur en métal en excès par rapport à la stoechiométrie de la réaction entre le métal et le composé organique considérés. Des exemples de composés surbasés utilisables dans la présente invention comprennent les sels de métaux alcalino-terreux insolubles de l'eau, tels que les sulfonates, les phénates et alkylphénates, les salicylates et alkylsalicylates, les phosphonates, les thiophosphonates, les naphténates, les carboxylates, etc, et leurs mélanges. Habituellement, la composition aqueuse renfermera d'environ 10 à environ 25% en poids de composé surbasé. De préférence, elle contiendra environ 20% de composé surbasé.

Le tensioactif utilisé est un tensioactif "temporaire" en ce sens qu'il remplit sa fonction d'émulgateur lorsqu'il est présent dans l'émulsion sous forme de sel d'ammonium et qu'il se décompose, au cours du séchage, en ammoniac qui s'évapore et en un acide qui réagit avec le composé surbasé pour former un sel peu sensible à l'eau. Le tensioactif temporaire peut par exemple être un sel d'ammonium d'un acide carboxylique, préparé en mettant un acide carboxylique en présence d'ammoniaque. Des acides carboxyliques convenables comprennent les acides mono- ou polycarboxyliques saturés ou insaturés, à chaîne linéaire ou ramifiée renfermant de 6 à 30 atomes de carbone, ainsi que les mélanges de ceux-ci. Le tensioactif temporaire peut également être un sel d'ammonium d'un acide sulfonique, obtenu par réaction d'un acide sulfonique avec de l'ammoniaque. Des acides sulfoniques convenables comprennent les acides alkylsulfoniques, les acides mono-, di- ou trialkylbenzène sulfoniques, linéaires ou ramifiés, renfermant de 8 à 60 atomes de carbone, les acides mono- ou polyalkyl naphtalène sulfoniques, les composés connus sous le nom de "linear alkylbenzene bottom", obtenus par sulfonation des culots de distillation des alkylbenzènes, les acides sulfoniques naturels et leurs mélanges. Des acides sulfoniques préférés comprennent les acides monoalkyl- et dialkylbenzène sulfoniques, dans lesquels le groupe alkyle est linéaire ou ramifié et renferme de 8 à 60 atomes de carbone et, en particulier, les acides monoalkylbenzène sulfoniques dont le groupe alkyle renferme en moyenne 24 atomes de carbone. Le tensioactif temporaire utilisable dans la présente invention peut également être un sel d'ammonium de l'un des acides suivants : les acides alkylphosphoriques ou alkylarylphosphoriques, les acides alkylphosphoniques ou alkylarylphosphoniques, les acides résiniques et les acides naphténiques. Enfin, le tensioactif selon l'invention peut être un mélange de plusieurs des composés décrits ci-dessus. Le tensioactif représente environ 5 à environ 15% du poids total de la composition aqueuse, de préférence environ 10% du poids total de la composition.

Le co-solvant, qui a pour fonction de stabiliser et fluidifier l'émulsion, d'éviter l'inclusion d'eau dans le film au cours du séchage en formant un azéotrope avec l'eau, et de faciliter la formation d'un film de revêtement régulier, sera généralement choisi parmi les composés suivants : les alkyléthers de mono- ou dialkylène glycol ou leurs esters, les esters d'alcools-éther et les alcools ayant de 3 à 12 atomes de carbone. De préférence, le co-solvant est un alkyléther de dialkylène glycol. Le co-solvant représente de 0 à 20% du poids total de la composition aqueuse, de préférence de 5 à 10% du poids total de la composition.

La composition aqueuse selon l'invention, en particulier lorsqu'elle est utilisée comme composition de revêtement, peut en outre comprendre au moins l'un des composés suivants :
un agent anti-mousse pour faciliter la formation et l'application d'un film sans bulles,
un agent de conservation biocide pour éviter l'attaque des constituants de l'émulsion par des micro-organismes,
une charge pour renforcer la résistance du film,
un pigment anti-corrosion ou un pigment classique,
un agent anti-corrosion spécifique pour éviter l'apparition de rouille au cours du séchage du film de protection, après application de celui-ci sur la surface à traiter,
une cire ou un polymère en émulsion pour augmenter la dureté du film, etc.

Lorsqu'elle est utilisée comme composition de revêtement, la composition décrite ci-dessus peut être appliquée par tout moyen connu de l'homme du métier. Par exemple, le revêtement peut être appliqué par trempage, à la brosse, par pulvérisation, à la filière, aux rouleaux, etc. Les surfaces métalliques à revêtir peuvent par exemple être constituées de fer, d'aluminium, de cuivre, de zinc, etc, et de leurs alliages.

Pour une utilisation comme additif anti-corrosion dans une peinture, par exemple de type acrylique ou de type "polyester", la composition selon l'invention sera avantageusement ajoutée en une quantité allant d'environ 0,5% à environ 25%, mieux, de l'ordre de 1%.

L'exemple suivant illustre un mode de préparation préféré d'un exemple de composition selon l'invention, qui a été testée successivement en tant que composition de revêtement et comme additif anti-corrosion d'une peinture.

### Exemple

### Préparation de l'émulsion

On introduit dans un bécher de 1 litre 350 g d'eau permutée et 60 g d'éther butylique du diéthylène glycol. On disperse à température ambiante, sous agitation -obtenue par exemple à l'aide d'un appareil tel que Ultra Turrax, fourni par JANKE & KUNKEL, Staufen, Allemagne -, 42 g d'un acide benzène sulfonique ayant un substituant renfermant 24 atomes de carbone. Puis on ajoute 7 g environ d'ammoniaque à 25%. La solution obtenue est limpide, son pH est de l'ordre de 8,5.

La solution précédente est chauffée vers 60°C en évitant les pertes d'ammmoniac. On coule ensuite lentement dans celle-ci, sous forte agitation cisaillante, 141 g d'ARCOT 785 (précédemment appelé ARCOT 800) préalablement fondu à environ 90°C. ARCOT 785 est un composé complexe, dérivé d'un carboxylate surbasé au calcium, dont l'indice de neutralisation basique est de l'ordre de 130 mg de KOH/g, disponible auprès de P.C.A.S., Longjumeau, France. La solution résultante est refroidie sous agitation et conditionnée à une température d'environ 30°C.

Cette composition est un liquide fluide, homogène, de couleur brune, faiblement odorant, qui ne dégage pas d'odeur d'ammoniac perceptible. Elle a un pH de 7,8. L'émulsion est homogène en fin de fabrication, après 24 heures et après un mois. On n'a pas observé de relargage, c'est-à-dire de séparation des constituants. En outre, on a mesuré la viscosité Brookfield de cette composition à 23°C. Celle-ci est respectivement de 4.250, 2.750, 1.700 et 1.200 cPs aux vitesses 2, 4, 10 et 20 : la composition est donc fluide. Le pourcentage d'extrait sec théorique, mesuré après mise à l'étuve à 105°C pendant 18 heures, est de 30%. L'extrait sec est poissant et sa température de coulure est supérieure à 100°C.

Toutes les compositions présentées dans les Tableaux 1, 2 et 3 suivants ont été préparées de manière similaire à la composition ci-dessus, qui est identifiée sous la référence 18.

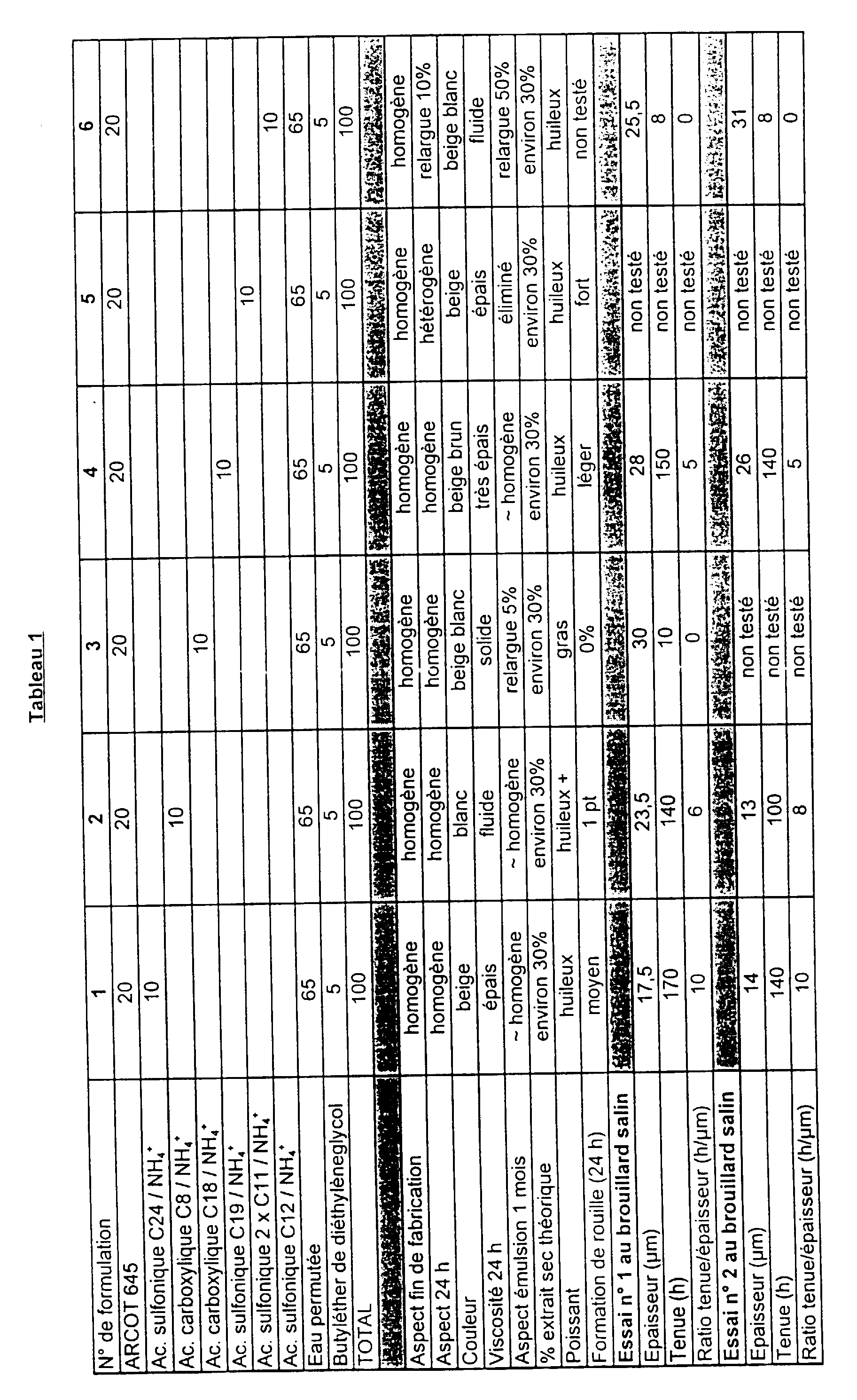

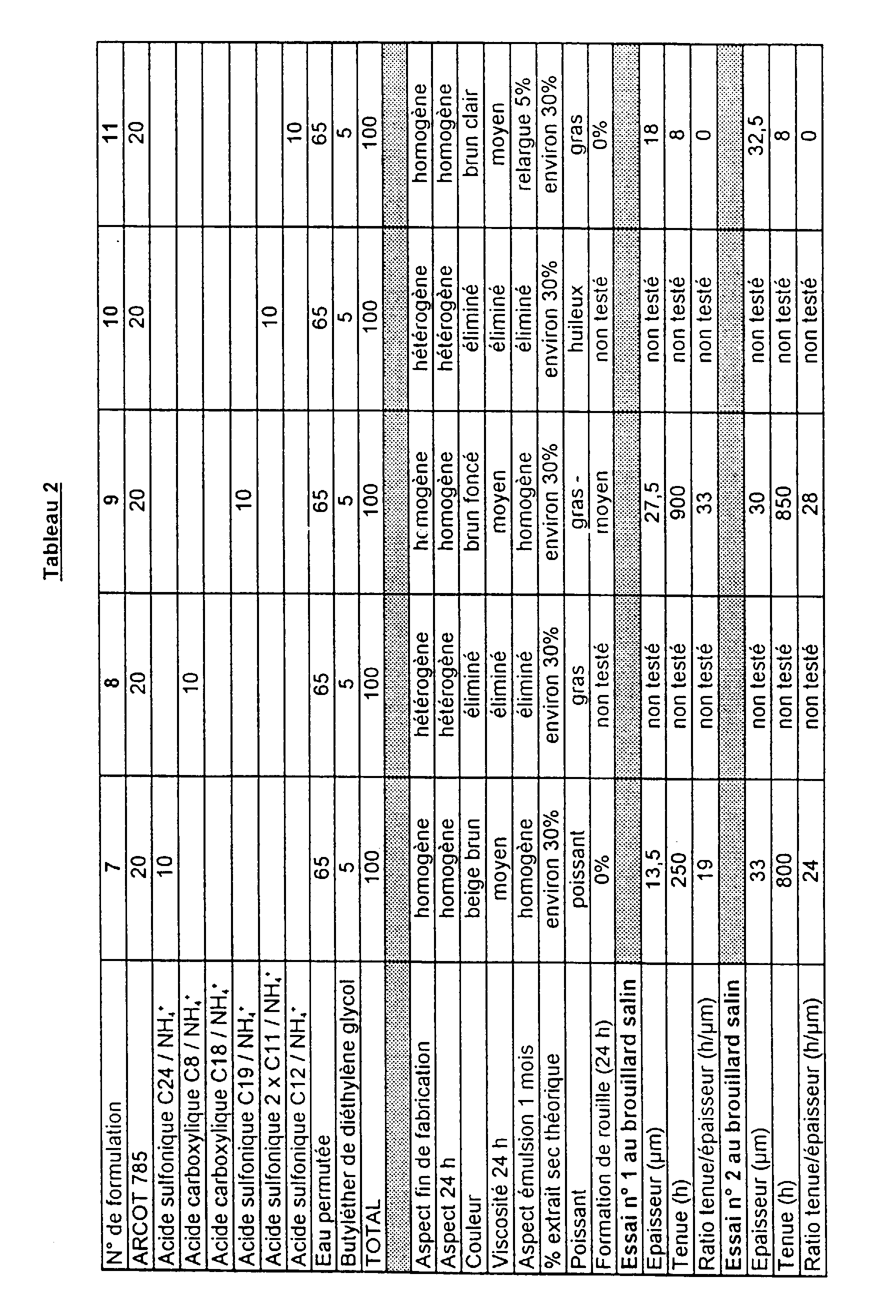

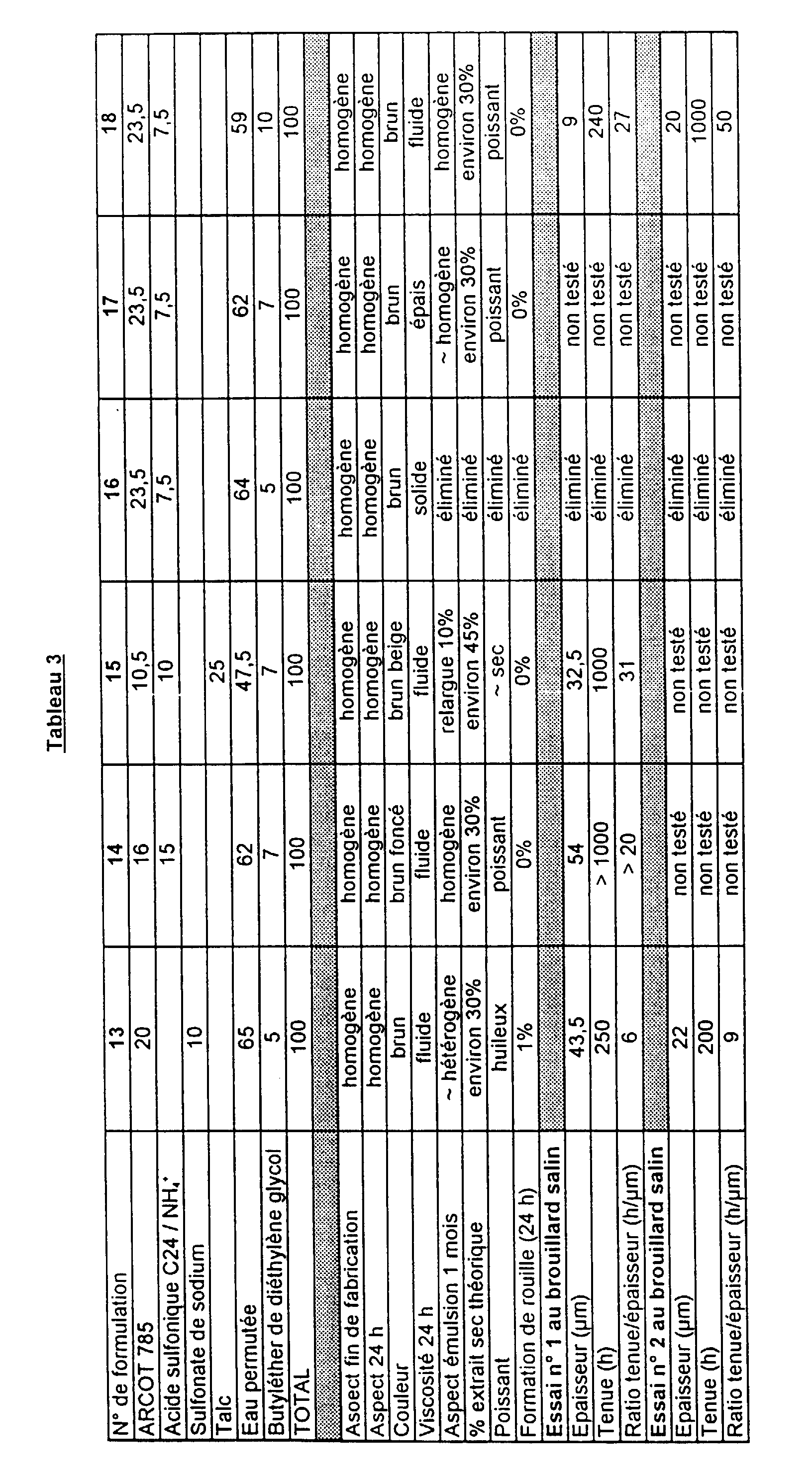

### A. Application de l'émulsion en tant que composition de revêtement

On a appliqué la composition (l'émulsion) ci-dessus sur une éprouvette en acier bordée par une cire, en utilisant un applicateur manuel, pour former un film. La formation de rouille (flash rusting) sur le film a été évaluée visuellement, en observant la surface et l'intensité des taches de corrosion éventuelles après 24 heures de séchage : aucune tache de rouille n'était visible sur le film. On a également réalisé un essai de pliure à 180° sur une éprouvette revêtue d'un film de 100 microns de la composition précédente, l'éprouvette ayant été refroidie une heure à -30°C . Ce test a donné des résultats satisfaisants. Enfin, on a soumis le film à un test au brouillard salin, effectué conformément à la norme NFX 41002. Le nombre d'heures de tenue à ce test sans formation significative de rouille a été mesuré, ainsi que l'épaisseur du film après 72 heures de séchage, de façon à déterminer le ratio tenue/épaisseur. Les résultats sont donnés dans le Tableau 4 ci-dessous :

**Tableau 4**

| Tenue au brouillard salin | Epaisseur | Ratio tenue/épaisseur |
|---|---|---|
| env. 240 heures | 9 µm | env. 27 h/µm |
| env. 1000 heures | 20 µm | env. 50 h/µm |
| env. 1500 heures | 30 µm | env. 50 h/µm |

Le Tableau 5 ci-après présente une comparaison des résultats obtenus dans l'essai au brouillard salin en utilisant, d'une part, la composition 18 ci-dessus et, d'autre part, des compositions anti-corrosion de l'art antérieur.

**Tableau 5**

| Composition | Tenue au brouillard salin | Epaisseur | Ratio tenue/épaisseur |
|---|---|---|---|
| 18 (tableau 3) | 1500 h | 30 µm | 50 h/µm |
| US-A-4 851 043 | 360 h | -- | -- |
| US-A-4 479 981 | 1000 h | 76 µm | 13 h/µm |
| US-A-4 444 802 | 400 h | 48 µm | 8 h/µm |
| 13 (tableau 3) | 200 h | 22 µm | 9 h/µm |

La composition testée présente donc une bien meilleure tenue au brouillard salin que les compositions de l'art antérieur.

Des essais identiques ont été effectués sur les compositions n° 1 à 18 présentées dans les Tableaux 1, 2 et 3. Les résultats de ces essais sont également présentés dans ces tableaux.

### Exemples comparatifs

Différentes compositions de revêtement obtenues selon les enseignements de la présente invention ont été testées et comparées.

### Exemple Comparatif 1 : Tensioactif temporaire.

On a testé six compositions selon la présente invention, renfermant chacune 20% en poids d'ARCOT 645, qui est un sel d'acide sulfonique surbasé dont l'indice de neutralisation basique est de 170 mg KOH/g, disponible auprès de P.C.A.S., Longjumeau, France ; 10% en poids d'un tensioactif temporaire ; 5% en poids d'éther (mono-)butylique du diéthylène glycol ; et environ 65% en poids d'eau permutée.

Les tensioactifs utilisés étaient respectivement les sels d'ammonium des composés suivants :
Composition n° 1 : un acide benzène sulfonique ayant un substituant alkyle renfermant 24 atomes de carbone
Composition n° 2 : un acide carboxylique renfermant 8 atomes de carbone
Composition n° 3 : un acide carboxylique renfermant 18 atomes de carbone
Composition n° 4 : un acide benzène sulfonique ayant un substituant renfermant 19 atomes de carbone
Composition n° 5 : un acide benzène sulfonique ayant deux substituants renfermant chacun 11 atomes de carbone
Composition n° 6 : un acide benzène sulfonique ayant un substituant renfermant 12 atomes de carbone.

Les résultats sont rassemblés dans le Tableau 1 ci-dessus.

### Exemple Comparatif 2 : Tensioactif temporaire.

Les essais précédents ont ensuite été répétés en remplaçant ARCOT 645 par ARCOT 785.

Les compositions n° 7, 8, 9, 10 et 11 résultantes correspondent respectivement aux compositions n° 1, 2, 4, 5 et 6.

Les résultats sont rassemblés dans le Tableau 2 ci-dessus.

On a extrait des Tableaux 1 et 2 les principaux paramètres des compositions de revêtement testées, à savoir : qualité de l'émulgateur, formation de rouille au séchage, tenue au brouillard salin. Chaque paramètre a ensuite été classé dans l'une des catégories suivantes : très bien, bien, moyen, mauvais, très mauvais. La qualité de l'émulgateur est appréciée en évaluant visuellement l'homogénéité des émulsions préparées, sur une période de temps allant jusqu'à un mois. L'émulgateur est très bon lorsque les émulsions sont homogènes, moyen lorsqu'elles deviennent hétérogènes, mauvais lorsque le taux de relargage observé est d'environ 5%, et très mauvais pour des taux de relargage plus importants.

Les résultats sont présentés dans le Tableau 6 ci-dessous.

**Tableau 6**

| Compositions | Emulgateur | Prévention de la rouille au séchage | Tenue au brouillard salin |
|---|---|---|---|
| 1 et 7 | Bien | Bien | Très bien |
| 2 et 8 | Moyen | Bien | Bien |
| 3 | Mauvais | Bien | Très mauvais |
| 4 et 9 | Très bien | Mauvais | Bien |
| 5 et 10 | Mauvais | Mauvais | Non testé |
| 6 et 11 | Mauvais | Bien | Très mauvais |

### Exemple comparatif 3 : Charge et co-solvant.

Dans le Tableau 3 ci-avant, la composition 15 contient 25% de talc. Les compositions 16, 17 et 18 contiennent différentes proportions de co-solvant.

### B. Utilisation de l'émulsion comme additif anti-corrosion dans une peinture

Le tableau 7 ci-après illustre un essai comparatif dans lequel différentes caractéristiques de deux compositions de peinture acrylique, et en particulier leur tenue au brouillard salin, ont été évaluées. La composition 1 renfermait des composants classiquement utilisés dans de telles peintures. La composition 2 ne se différenciait de la composition 1 qu'en ce qu'elle comprenait en outre 5,5% d'un additif selon l'invention, correspondant à la composition n° 18 du tableau 3 ci-dessus.

**Tableau 7**

| **Composition** | **1** | **2** |
|---|---|---|
| Emulsion acrylique A | 12,7 % | 12,7 % |
| Oxyde de titane | 4,4 % | 4,4 % |
| Talc | 4,6 % | 4,6 % |
| Pigment anti-corrosion | 7,3 % | 7,3 % |
| Anti-mousse | 0,2 % | 0,2 % |
| Emulsion acrylique B | 49,5 % | 49,5 % |
| Co-solvant A | 1,7 % | 1,7 % |
| Co-solvant B | 4,5 % | 4,5 % |
| Anti-rouille | 0,15 % | 0,15 % |
| Agent d'étalement | 0,5 % | 0,5 % |
| Exemple 18 | 0 | 5,5 % |
| NH₄OH à 20,5% masse | 0,6 % | 0,6 % |
| Eau | 13,85 % | 8,35 % |

| **Caractéristiques** | | |
|---|---|---|
| Extrait sec | 41,00 % pds | 41,00 % pds |
| pH | 8,2 | 8,2 |
| Viscosité | 250 cps | 250 cps |
| Dureté au crayon (ASTM D 3363)¹ | H | HB |
| Adhérence, % éliminé (ASTM D 3359) | 0 % | 0 % |
| Pendule Konig (ASTM D 4366) | 69 s/cycle | 52 s/cycle |
| Brouillard salin (ASTM B 117) | | |
| 75 h cloquage² | 2F | 0 |
| pénétration | > 5 mm | 0 mm |
| 250 h cloquage | 6MD | 0 |
| pénétration | > 10 mm | > 5 mm |

| | | |
|---|---|---|
| ¹ HB = plutôt mou; H = plutôt dur | | |
| ² Cotation ASTM D 714 Diamètre des cloques : 2 = env. 6 mm ; 4 = env. 3 mm ; 6 = env. 2 mm ; 8 = env. 1 mm Densité des cloques : F = faible ; M = moyenne ; MD = élevée ; D = très élevée | | |

Comme le montre le tableau précédent, l'additif selon l'invention conférait à la composition de peinture testée d'excellentes propriétés anti-corrosion.

Un autre essai a été effectué en utilisant une peinture de type "polyester" à laquelle a été ajouté 1% d'une composition selon l'invention, identique à la composition n° 18 du tableau 3, excepté que le composé ARCOT 785 a été débarrassé de son huile.

Cet essai a montré que la composition de peinture obtenue présentait, après cuisson, une tenue au brouillard salin, déterminée selon la norme précitée, supérieure à 500 heures.

## Revendications

1. Composition aqueuse, destinée à protéger des surfaces métalliques contre la corrosion, comprenant, en émulsion dans l'eau :
a) au moins un composé surbasé dont l'indice de neutralisation basique est supérieur à 40 et dont le sel est insoluble dans l'eau ; et
b) au moins un tensioactif constitué d'un sel d'ammonium d'un acide organique.

2. Composition selon la revendication 1, caractérisée en ce qu'elle renferme en outre un co-solvant.

3. Composition selon la revendication 1 ou 2, caractérisée en ce que ledit composé surbasé est un sel de métal alcalino-terreux insoluble dans l'eau.

4. Composition selon l'une quelconque des revendications 1 à 3, caractérisée en ce que ledit tensioactif temporaire est un sel d'ammonium d'un acide carboxylique.

5. Composition selon l'une quelconque des revendications 1 à 3, caractérisée en ce que ledit tensioactif temporaire est un sel d'ammonium d'un acide sulfonique.

6. Composition selon la revendication 5, caractérisée en ce que ledit tensioactif temporaire est un sel d'ammonium d'un acide monoalkyl benzène sulfonique ou dialkylbenzène sulfonique.

7. Composition selon la revendication 6, caractérisée en ce que ledit tensioactif temporaire est un sel d'ammonium d'un acide monoalkyl benzène sulfonique dans lequel le groupe alkyle renferme en moyenne 24 atomes de carbone.

8. Composition selon l'une quelconque des revendications précédentes, caractérisée en ce que ledit co-solvant est un alkyléther de dialkylène glycol.

9. Composition selon l'une quelconque des revendications précédentes, caractérisée en ce que ledit composé surbasé représente environ 10 à environ 25% du poids total de la composition.

10. Composition selon l'une quelconque des revendications précédentes, caractérisée en ce que ledit tensioactif représente d'environ 5 à environ 15% du poids total de la composition.

11. Composition selon l'une quelconque des revendications précédentes, prise en combinaison avec la revendication 2, caractérisée en ce que ledit co-solvant représente jusqu'à environ 20% du poids total de la composition.

12. Composition selon l'une quelconque des revendications précédentes, caractérisée en ce qu'elle comprend en outre au moins l'un des composés suivants : un agent anti-mousse, un agent de conservation biocide, une charge et un pigment.

13. Composition selon l'une quelconque des revendications précédentes, caractérisée en ce qu'elle comprend en outre une cire et/ou un polymère en émulsion.

14. Utilisation de la composition selon l'une quelconque des revendications précédentes comme composition de revêtement.

15. Utilisation de la composition selon l'une quelconque des revendications 1 à 11 comme additif anti-corrosion d'une peinture.

16. Utilisation selon la revendication 15, caractérisée en ce que ladite composition est présente en une quantité allant d'environ 0,5% à environ 25%.

17. Utilisation de la composition selon l'une quelconque des revendications 1 à 11 comme additif dans un primaire anticorrosion.

## Claims

1. Aqueous composition, intended to protect metallic surfaces against corrosion, comprising, in an emulsion in water:
a) at least one overbased compound the basic neutralization value of which is greater than 40 and the salt of which is insoluble in water; and
b) at least one surfactant constituted by an ammonium salt of an organic acid.

2. Composition according to claim 1, characterized in that it comprises in addition a co-solvent.

3. Composition according to claim 1 or 2, characterized in that said overbased compound is an alkaline-earth metal salt insoluble in water.

4. Composition according to any one of claims 1 to 3, characterized in that said temporary surfactant is an ammonium salt of a carboxylic acid.

5. Composition according to any one of claims 1 to 3, characterized in that said temporary surfactant is an ammonium salt of a sulphonic acid.

6. Composition according to claim 5, characterized in that said temporary surfactant is an ammonium salt of a monoalkylbenzenesulphonic or dialkylbenzenesulphonic acid.

7. Composition according to claim 6, characterized in that said temporary surfactant is an ammonium salt of a monoalkylbenzenesulphonic acid in which the alkyl group contains on average 24 carbon atoms.

8. Composition according to any one of the preceding claims, characterized in that said co-solvent is a dialkylene glycol alkyl ether.

9. Composition according to any one of the preceding claims, characterized in that said overbased compound represents from about 10 to about 25% of the total weight of the composition.

10. Composition according to any one of the preceding claims, characterized in that said surfactant represents from about 5 to about 15% of the total weight of the composition.

11. Composition according to any one of the preceding claims, taken in combination with claim 2, characterized in that said co-solvent represents up to about 20% of the total weight of the composition.

12. Composition according to any one of the preceding claims, characterized in that it comprises in addition at least one of the following compounds: an antifoaming agent, a biocide preserving agent, a filler and a pigment.

13. Composition according to any one of the preceding claims, characterized in that it contains in addition a wax and/or a polymer in emulsion.

14. Use of the composition according to any one of the preceding claims as a coating composition.

15. Use of the composition according to any one of claims 1 to 11 as a paint anticorrosive additive.

16. Use according to claim 15, characterized in that said composition is present in a quantity ranging from about 0.5% to about 25%.

17. Use of the composition according to any one of claims 1 to 11 as an additive in an anticorrosive primer.

## Patentansprüche

1. Wäßrige Zusammensetzung zum Schützen von metallischen Oberflächen gegen die Korrosion, die emulgiert in Wasser enthält:
(a) zumindest eine überalkalisierte Verbindung, deren basische Neutralisationszahl größer als 40 ist und deren Salz unlöslich in Wasser ist; und
(b) zumindest ein Tensid, das von einem Ammoniumsalz einer organischen Säure gebildet ist

2. Zusammensetzung gemäß Anspruch 1, dadurch gekennzeichnet, daß sie überdies ein Verschnitt mittel enthält.

3. Zusammensetzung gemäß Anspruch 1 oder 2, dadurch gekennzeichnet, daß die überalkalisierte Verbindung ein Salz eines Erdalkalimetalls ist, welches in Wasser unlöslich ist.

4. Zusammensetzung gemäß irgendeinem der Ansprüche 1 bis 3, dadurch gekennzeichnet, daß das temporäre Tensid ein Ammoniumsalz einer Carboxylsäure ist.

5. Zusammensetzung gemäß irgendeinem der Ansprüche 1 bis 3, dadurch gekennzeichnet, daß das temporäre Tensid ein Ammoniumsalz einer Sulfosäure ist.

6. Zusammensetzung gemäß Anspruch 5, dadurch gekennzeichnet, daß das temporäre Tensid ein Ammoniumsalz einer Monoalkylbenzolsulfosäure oder einer Dialkylbenzolsulfosäure ist.

7. Zusammensetzung gemäß Anspruch 6, dadurch gekennzeichnet, daß das temporäre Tensid ein Ammoniumsalz einer Monoalkylbenzolsulfosäure ist, in der die Alkylgruppe im Durchschnitt 24 Kohlenstoffatome enthält.

8. Zusammensetzung gemäß irgendeinem der vorhergehenden Ansprüche, dadurch gekennzeichnet, daß das Verschnittmittel ein Alkylether von Dialkylenglykol ist.

9. Zusammensetzung gemäß irgendeinem der vorhergehenden Ansprüche, dadurch gekennzeichnet, daß die überalkalisierte Verbindung ungefähr 10 bis ungefähr 25 % des Gesamtgewichts der Zusammensetzung bildet.

10. Zusammensetzung gemäß irgendeinem der vorhergehenden Ansprüche, dadurch gekennzeichnet, daß das Tensid ungefähr 5 bis ungefähr 15 % des Gesamtgewichts der Zusammensetzung bildet.

11. Zusammensetzung gemäß irgendeinem der vorhergehenden Ansprüche in Kombination mit Anspruch 2, dadurch gekennzeichnet, daß das Verschnittmittel bis ungefähr 20 % des Gesamtgewichts der Zusammensetzung bildet.

12. Zusammensetzung gemäß irgendeinem der vorhergehenden Ansprüche, dadurch gekennzeichnet, daß sie überdies zumindest eine der folgenden Verbindungen umfaßt: ein Schaumgegenmittel, ein biozides Konservierungsmittel, ein Füllmittel und ein Pigment.

13. Zusammensetzung gemäß irgendeinem der vorhergehenden Ansprüche, dadurch gekennzeichnet, daß sie überdies ein Wachs und/oder ein Polymer in Emulsion enthält.

14. Verwendung der Zusammensetzung gemäß irgendeinem der vorhergehenden Ansprüche als Überzugszusammensetzung.

15. Verwendung der Zusammensetzung gemäß irgendeinem der Ansprüche 1 bis 11 als Antikorrosionsmittel einer Farbe.

16. Verwendung gemäß Anspruch 15, dadurch gekennzeichnet, daß die Zusammensetzung in einer Menge vorliegt, die von ungefähr 0,5 % bis ungefähr 25 % verläuft.

17. Verwendung der Zusammensetzung gemäß irgendeinem der Ansprüche 1 bis 11 als Additiv in einer Antikorrosions-Grundierung.
